## Europäisches Patentamt
## European Patent Office
## Office européen des brevets

(11) Publication number: **0 052 291**
**B1**

## (12) EUROPEAN PATENT SPECIFICATION

(45) Date of publication of patent specification: **24.07.85**

(21) Application number: **81109413.5**

(22) Date of filing: **30.10.81**

(51) Int. Cl.⁴: **F 16 F 15/22, B 60 K 11/04, B 60 R 16/02**

(54) Vibration-absorbing system for an automotive vehicle.

(30) Priority: **13.11.80 JP 159799/80**

(43) Date of publication of application:
**26.05.82 Bulletin 82/21**

(45) Publication of the grant of the patent:
**24.07.85 Bulletin 85/30**

(84) Designated Contracting States:
**DE FR GB**

(56) References cited:
**EP-A-0 006 088**
**DE-A-2 634 990**
**DE-A-2 706 473**
**DE-B-2 932 077**
**FR-A-1 497 604**
**FR-A-2 098 600**
**FR-A-2 126 551**
**FR-A-2 336 268**
**US-A-1 465 660**
**US-A-1 791 815**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Muroi, Akira**
**4, Daishi-cho 3-chome Kawasaki-ku**
**Kawasaki-shi Kanagawa-ken (JP)**
Inventor: **Sano, Masakatsu**
**9-11, Shimizu 2-chome**
**Suginami-ku Tokyo (JP)**
Inventor: **Kamiya, Junichi Nissan Nishiya**
**Kazoku**
**Apartment B-4-202 788-1, Shirane-cho, Asahi-ku**
**Yokohama-shi Kanagawa-ken (JP)**
Inventor: **Okajima, Masao**
**23-11, Sakuramori 2-chome**
**Yamato-shi Kanagawa-ken (JP)**
Inventor: **Inoue, Arifumi**
**714, Nishiterao-cho Kanagawa-ku**
**Yokohama-shi Kanagawa-ken (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The invention relates to a vibration-absorbing system for an automotive vehicle of the type as shown in the precharacterising clause of claim 1. A system of this type is known from US—A—1,791,815.

Said prior art reference discloses a mounting by which a storage battery may be removably supported on a motor vehicle and, in particular, said conventional battery mounting cushions shocks and stresses and frees the battery of damaging strains incident to vibrations as well as road shocks.

According to said conventional battery mounting, the storage battery is received between upwardly extending side portions of a U-shaped member and rests upon and is supported by a bottom cross portion thereof. Said bottom portion evenly distributes the supporting weight of said battery upon three elastic blocks of rubber or other suitable material. These resilient blocks are deemed to absorb and save the battery structure free from the various vibrations and jars incident to vehicular travel.

The conventional vibration-absorbing system fails, however, to absorb low-frequency vibrations of the vehicle, in particular, under engine idling operations.

In general, low-frequency vibrations in an automotive vehicle may result for a number of reasons such as combustion of the air-fuel mixture in the engine, fluctuation of engine rotational speed during engine idling operation, a heterogeneous distribution of a mass on the vehicle tyre or a hardness on the tyre periphery, and non-uniform configuration of the rotatable portion in a brake, etc. This vibration forcedly shakes the vehicle body and in turn passenger seats mounted on the vehicle body as well as the steering wheel shaft supported on the vehicle body. Such vibrations cause driver and passenger discomfort and annoyance.

A vehicle body usually has resonance frequency in relation to the forced (induced) mechanical vibration thereof. According to experiments for determining the resonance frequency of a normal passenger car body, the resonance frequency ranges approximately from 21 to 23 Hz. Said experiments have revealed that the aplitudes of the vertical vibrations of the seat mounted on the vehicle body peak and the aplitudes of vertical vibrations of the steering wheel supported on the vehicle body each peak at engine speeds of 650 to 700 RPM and, unfortunately, engine speeds of 650 to 700 RPM are encountered under engine idling operation. Thus, under idling conditions low-frequency vibrations are particularly troublesome.

From EP—A—6088 a tuned spring-mass vibration absorber is known, in which a dynamic mass is suspended from a vibrating support member, such as a helicopter fuselage, by a plurality of canti-levered leaf springs integrally connected to the dynamic mass so that the mass and the spring are coincident, so that the springs are shaped to constitute a substantial part of the vibration absorber effective mass, and so that the springs are pivotally connected to the support member so as to impart no movements thereto.

FR—A—1497604 shows a vibration-absorbing system for an automotive vehicle in which an automotive vehicle accessory is mounted indirectly on the vehicle body via the vehicle engine. The mounting of the accessory on the engine may have a certain flexibility in order to eliminate a particular vibration of the engine.

It seems to be improbable for said conventional system to prevent vehicle vibration resulting for. reasons other than the engine vibration.

The claimed invention is designed to improve the vibration absorbing system of US—A—1,791,815 and, in particular, to absorb low-frequency vibrations of the vehicle for efficiently suppressing vibrations of the vehicle body.

The inventive vibration-absorbing system for an automotive vehicle is able to effectively absorb vertical low-frequency vibrations. One of the outstanding features of the inventive system is that the vehicle storage battery is used as a damping mass for suppressing vibrations of the vehicle body; the eigen frequency of the inventive vibration absorbing system being set equal to the resonance frequency of the vehicle body.

The storage battery, the upper bracket and the resilient members of the inventive vibration absorbing system constitute a resonance-dynamic damper attached to the front end of the vehicle body. The mass of this resonance type dynamic damper is substantially constituted by the mass of the battery and the spring thereof is constituted by the resilient members as defined in claim 1.

Since the inventive vibration absorbing device is attached to the vehicle body and since the absorbing device is tuned to the low-frequency vibration of the vehicle body, the low-frequency vibrations are effectively suppressed to an acceptable low level. Since this dynamic damping system is of the resonance type, it can suppress the vehicle body vibrations sufficiently using resilient members of relatively small weight. Therefore, the vehicle body vibrations are sufficiently reduced without increasing the weight of the vehicle.

One way of carrying out the invention is described in detail below with reference to drawings which illustrate only one specific embodiment, in which:

Fig. 1 is a diagrammatic view of an automotive vehicle equipped with an inventive vibration-absorbing system;

Fig. 2 is a graph of vibration amplitude of a steering wheel versus engine rotational speed;

Fig. 3 is a graph of vibration amplitude of a seat versus engine rotational speed;

Fig. 4 is a perspective view of a vibration-absorbing system according to the present invention; and

Fig. 5 is a perspective exploded-view of the upper and lower brackets of Fig. 4.

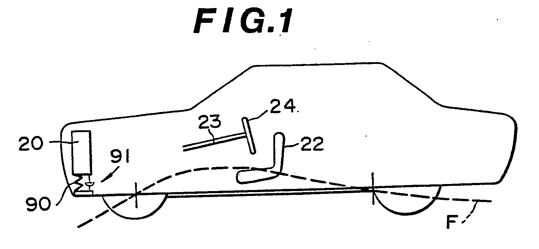

With reference to Fig. 1, there is shown an automotive vehicle having a battery 20 as an accessory, which is supported on the vehicle body near by resilient mounting means 90, 91 the front end thereof. The vehicle also has a seat 22 mounted on the vehicle body near the center thereof and a steering wheel shaft 23 with a steering wheel 24 supported on the vehicle body.

The battery 20 and its resilient mounting means constitute a vibration-absorbing system attached to the front end of the vehicle body. This system has an eigen frequency (natural or resonance frequency) $f_o$ corresponding to a large mode of mechanical vibration of the system;

$$f_o = \tfrac{1}{2}\sqrt{\frac{(k1+k2)}{(W/g)\pi}}$$

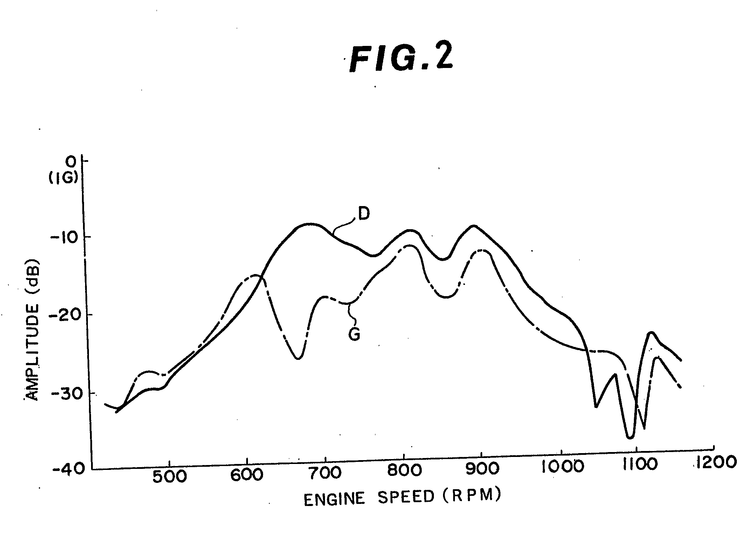

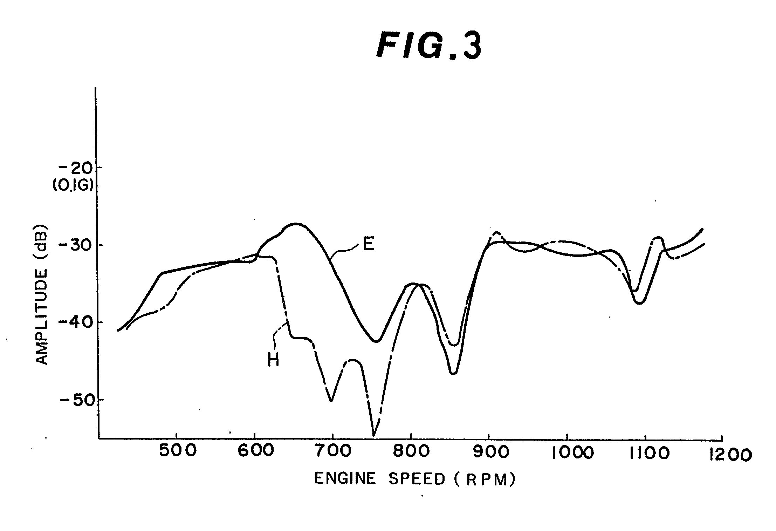

where W is the weight of the battery 20, g is the acceleration of gravity, k1 is a resultant spring modulus of the upper mounting devices and k2 is a resultant spring modulus of the lower mounting devices. The eigen frequency $f_o$ is set equal to a relatively low resonance-frequency of the vehicle body in relation to the forced mechanical-vibration thereof or equal to a frequency of the low-frequency vehicle body vibrations induced under vehicle engine idling operations. For example, when the vehicle body has a resonance frequency ranging approximately from 21 to 23 Hz (Figs. 2 and 3) the frequency $f_o$ is preferably set to a value of approximately 20 to 30 Hz and most preferably set to a value of approximately 21 to 23 Hz to obtain a vibration-suppression effect. These values of the frequency $f_o$ may be adjusted in the manner by setting (k1+2k)/(W/g) equal to values approximately ranging from 15,775 to 34,595 and from 17,392 to 20,863 respectively. When the vehicle is driven by a four-cylinder, four-cycle engine whose idle speed is set to a value of 700 to 750 RPM, the frequency $f_o$ is preferably set to a value of approximately 20 to 30 Hz and most preferably set to a value of approximately 23 to 25 Hz to obtain a vibration-suppression effect under engine idling operations. These values of the frequency $f_o$ may be also adjusted in the manner by setting (k1+k2)/(W/g) equal to values approximately ranging from 15,775 to 34,595 and from 17,392 to 24,649 respectively.

As shown by the broken line F in Figure 1, the vibration mode of the vehicle body in a low-frequency band of 20 to 40 Hz has two nodes located near the front and rear wheels respectively, and three antinodes the largest located near the front end of the vehicle body, and the others located near the rear end of the vehicle body and near the seat 22 and steering wheel shaft 23, respectively. As a result of such vibrations, the seat 22 and steering wheel shaft 23 would be forcedly vibrated with great amplitudes while the battery 20 near the front end of the vehicle body would be forcedly vibrated with a much greater amplitude. However, in accordance with the invention, the battery 20 and lower mounting devices act as a low-frequency vibration-absorbing device. Since this vibration-absorbing device is attached to the vehicle body near its front end at which the greatest antinode of the vibration mode F occurs and since the absorbing device is tuned to the low-frequency vibration of the vehicle body, the low-frequency vibration is effectively suppressed to an acceptably low level. In other words, the above system acts as a resonance-type dynamic damper, the mass of which is substantially constituted by the battery 20 and the spring of which is constituted by the resilient mounting means. Since this dynamic damper is of the resonance type, it can suppress the vehicle body vibration sufficiently using resilient members of relatively small weight. Therefore, the vehicle body vibrations are sufficiently reduced without increasing the weight of the vehicle or the number of steps of manufacturing or assembling the vehicle. In Figure 1, the numeral 90 designates each resilient member while the numeral 91 designates a small damper which is constituted by each resilient member per se.

According to experiments for measuring vibrations of the vehicle body powered by the four-cylinder, four-cycle engine at varying engine rotational speeds, the amplitudes of the low-frequency vibrations of the vehicle body at engine speeds ranging from 650 to 700 (RPM) are remarkably reduced. In such measurements the eigen-frequency $f_o$ of the vibration-absorbing system is set to 23 Hz. In fact, as shown by the broken curve G of Fig. 2, the amplitudes of the vertical vibrations of the steering wheel 24 at engine speeds ranging from 650 to 700 (RPM) are considerably reduced as compared to the solid curve D of Fig. 2 obtained with a conventional vehicle body. As shown by the broken curve H of Fig. 3, the amplitudes of the vertical vibrations of the seat 22 at engine speeds ranging from 650 to 750 are also considerably reduced as compared to the solid curve E of Fig. 3 obtained with the conventional vehicle body.

The above results of the experiments are obtained under conditions where the damping factor of each damper 91 is set to a relatively small value. On the other hand, the damping factor may be set to a relatively large value. In this case, the dynamic damper, that is, the vibration-absorbing system, is presumed to suppress the vibrations of the vehicle body over a relatively broad range of frequency.

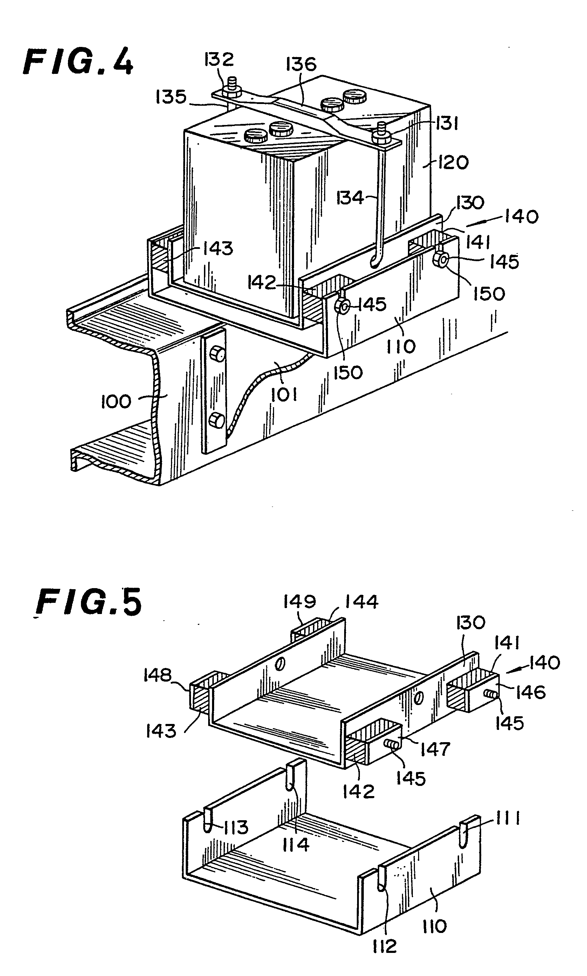

Referring to Figs. 4 and 5, there is shown a vibration-absorbing system according to a preferred embodiment of the present invention. A battery bracket consists of lower and upper brackets 110 and 130. The lower bracket 110 is secured to the front face of a vehicle body side member 100 by means of a couple of stays 101, only one of which is shown in Figure 4. The upper bracket 130 removably holds the battery 120 and is connected to the lower bracket 110 by means of a resilient mounting device 140. In this way the battery 120 is resiliently supported on the vehicle body, and is generally located in an engine compartment at the front end of the vehicle body.

Specifically, the upper bracket 130 is of U-shaped section so as to accommodate the lower part of the battery 120. A pair of rods 134 and 135 extend vertically near opposite faces of the battery 120. The lower ends of the rods 134 and 135 are engaged to the opposite side walls of the upper bracket 130 respectively. The upper ends of the rods 134 and 135 are threaded and pass through opposite ends of a bar 136 respectively, which extends across the top surface of the battery 120. A pair of nuts 131 and 132 are mounted on the upper ends of the rods 134 and 135 respectively to press the bar 136 downwards so that the upper bracket 130 and the bar 136 will clamp the battery 120 therebetween.

The mounting device 140 includes rectangular parallelepiped resilient members 141, 142, 143, and 144 made, for example, of rubber. The resilient members 141 and 142 are attached, for example, by baking to the opposite ends of the outer surface of the upper bracket 130 side wall respectively. The resilient members 143 and 144 are attached, for example, also by baking to the opposite ends of the outer surface of the other upper bracket 130 side wall respectively. Rectangular plates 146, 147, 148, and 149 are attached, for example, by baking, to the surfaces of the resilient members 141, 142, 143, and 144 respectively opposite to the upper bracket 130 side walls. A screw 145 is secured to each plate 146, 147, 148, or 149 and protrudes from the plate oppositely to the respective resilient members 141, 142, 143 or 144.

The lower bracket 110 is of U-shaped section greater than that of the upper bracket 130 so as to accommodate the upper bracket 130 with the resilient members 141, 142, 143 and 144. Each side wall of the lower bracket 110 is provided with a couple of grooves 111 and 112, or 113 and 114 in the form of a vertically extending slot. Each screw 145 passes through the groove 111, 112, 113, or 114. A nut 150 is mounted on each screw 145 so as to press the lower bracket 110 against the plate 146, 147, 148 or 149 on the resilient member 141, 142, 143, or 144. The lower bracket 110 is spaced from the upper bracket 130 with the resilient members 141, 142, 143, and 144 substantially interposed between the lower and upper brackets. In this way, the upper bracket 130 is resiliently supported on the lower bracket 110, so that the battery 120 is in turn also resiliently supported on the vehicle body.

The battery 120, the upper bracket 130, and the resilient members 141, 142, 143, and 144 constitute a resonance-type dynamic damper attached to the front end of the vehicle body. This dynamic damper has its eigen frequency set equal to the resonance frequency of the vehicle body in relation to low-frequency mechanical vibration or equal to the relatively low-frequency of the vehicle body vibration induced under vehicle engine idling operation. The mass of this damper is substantially constituted by the mass of the battery 120, and the spring thereof is constituted by the resilient members 141, 142, 143, and 144.

It should be understood that further modifications and variations may be made in the present invention without departing from the scope of the present invention as set forth in the appended claims.

## Claims

1. A vibration-absorbing system for an automotive vehicle having a vehicle body and vehicle battery (120), the system comprising a resilient mounting device (140) for connecting the battery to the vehicle body such that the battery is resiliently supported on the vehicle body, said mounting device (140) comprising an upper bracket (130) of U-shaped section having first and second opposing side walls which accommodate the lower part of said battery (120), characterised by a lower bracket (110) of U-shaped section larger than the upper bracket (130) and having first and second opposing side walls and first and second resilient members (141, 142; 143, 144), the first resilient members (141, 142) being attached at one surface to an outer surface of the first upper bracket side wall and at an opposite surface to an inner surface of the first lower bracket side wall, the second resilient members (143, 144) being attached at one surface to an outer surface of the second upper bracket side wall and at an opposite surface to an inner surface of the second lower bracket side wall, the lower bracket (110) being spaced from the upper bracket (130) and secured to the vehicle body so that the battery (120) will be resiliently supported on the vehicle body; the eigen frequency of the vibration-absorbing system comprising said battery, brackets and resilient members (120, 130, 141 to 144) being set equal to the resonance frequency of said vehicle body.

2. A vibration-absorbing system as set forth in claim 1, characterised in that a screw (145) is secured to each resilient member (141 to 144) such that it extends towards said first and second lower bracket side wall and that each side wall of said lower bracket (110) is provided with respective slots (111 to 114) through which the screws (145) pass.

## Patentansprüche

1. Schwingungsdämpfendes System für ein mit einem Fahrzeugkörper und einer Fahrzeugbatterie (120) versehenes Kraftfahrzeug, wobei das System eine elastische Befestigungseinrichtung (140) zum Verbinden der Batterie mit dem Fahrzeugboden derart umfaßt, daß die Batterie elastisch auf dem Fahrzeugboden abgestützt ist, wobei die Befestigungseinrichtung (140) einen oberen Bügel (130) mit U-fömigem Querschnitt umfaßt, der erste und zweite einandergegenüberliegende Seitenwände aufweist, welche den unteren Bereich der Batterie (120) aufnehmen, gekennzeichnet durch einen unteren Bügel (110) von U-förmiger Querschnittsgestalt, welcher größer ist als der obere Bügel (130) und erste und zweite einandergegenüberliegende Seitenwände sowie erste und zweite elastische Glieder (141, 142; 143, 144) aufweist, wobei die ersten elastischen Glieder (141, 142) mit einer Oberfläche an einer Außenoberfläche der ersten oberen Bügel-Seitenwand und an einer gegenüberliegenden Oberfläche an einer Innenoberfläche der ersten Seitenwandung des unteren Bügels befestigt sind und die zweiten elastischen Glieder (143, 144) mit einer Oberfläche an einer Außenfläche der zweiten Seitenwand des oberen Bügels und an einer gegenüberliegenden Oberfläche an einer Innenfläche der zweiten Seitenwandung des unteren Bügels befestigt sind, wobei der untere Bügel (110) vom oberen Bügel (130) beabstandet und an dem Fahrzeugkörper so befestigt ist, daß die Batterie (120) elastisch auf dem Fahrzeugboden abgestützt ist, wobei die Eigenfrequenz des schwingungsabsorbierenden Systems (120, 130, 141 bis 144), welches die Batterie, die Bügel und die elastischen Glieder umfaßt, gleich der Resonanzfrequenz des Fahrzeugkörpers eingestellt ist.

2. Schwingungsabsorbierendes System nach Anspruch 1, dadurch gekennzeichnet, daß eine Schraube (145) so an jedem elastischen Glied (141 bis 144) befestigt ist, daß sie sich in Richtung auf die erste und zweite Seitenwand des unteren Bügels erstreckt und daß jede Seitenwand des unteren Bügels (110) mit entsprechenden Schlitzen (111 bis 114) versehen ist, durch welche die Schrauben (145) hindurchgreifen.

**Revendications**

1. Système d'absorption de vibrations pour un véhicule automobile ayant une carrosserie de véhicule et une batterie de véhicule (120), le système comprenant un dispositif de montage élastique (140) pour connecter la batterie à la carrosserie du véhicule de façon que la batterie soit élastiquement supportée sur la carrosserie du véhicule, ledit dispositif de montage (140) comprenant une patte supérieure (130) de coupe en forme de U ayant des première et seconde parois latérales et opposées qui reçoivent la partie inférieure de ladite batterie (120), caractérisé par une patte inférieure (110) ayant une section en forme de U plus grande que la patte supérieure (130), et ayant des première et seconde parois latérales et opposées et des premier et second organes élastiques (141, 142; 143, 144), les premiers organes élastiques (141, 142) étant attachés par une surface à une surface externe de la première paroi latérale de la patte supérieure et par une surface opposée à une surface interne de la première paroi latérale de la patte inférieure, les seconds organes élastiques (143, 144) étant attachés par une surface à une surface externe de la seconde paroi latérale de la patte supérieure et par une surface opposée à une surface interne de la seconds paroi latérale de la patte inférieure, la patte inférieure (110) étant espacée de la patte supérieure (130) et fixée à la carrosserie du véhicule de façon que la batterie (120) soit élastiquement supportée sur la carrosserie du véhicule; la fréquence propre dudit système absorbant les vibrations comprenant ladite batterie, lesdites pattes et lesdits organes élastiques (120, 130, 141 à 144) étant établie égale à la fréquence de résonance de ladite carrosserie du véhicule.

2. Système d'absorption de vibrations selon la revendication 1 caractérisé en ce qu'une vis (145) est fixée à chaque organe élastique (141 à 144) de façon à s'étendre vers lesdites première et seconde parois latérales de la patte inférieure et en ce que chaque paroi latérale de ladite patte inférieure (110) est pourvue de fentes respectives (111 à 114) par où passent les vis (145).

# FIG.1

FIG.2

ENGINE SPEED (RPM)

0 052 291

**FIG.3**

*FIG.4*

*FIG.5*